# FASCICULE DE BREVET EUROPEEN

(11) **EP 1 464 567 B1**
(45) Date de publication et mention de la délivrance du brevet: **21.09.2011**
(21) Numéro de dépôt: 04290856.6
(22) Date de dépôt: 01.04.2004
(51) Int. Cl.: B62D 25/20, B62D 29/04, B62D 21/17, B60R 9/055

(54) **Elément de faux-plancher de véhicule automobile, faux-plancher comprenant de tels éléments, et véhicule automobile ainsi équipé**
Bauteil eines Fahrzeug-Doppelbodens, derartiger Fahrzeug-Doppelboden, und derartiges Fahrzeug
Element for vehicle double bottom, double bottom with such element, and vehicle with such a double bottom

(30) Priorité: 02.04.2003 FR 0304115
(43) Date de publication de la demande: 06.10.2004
(73) Titulaire: Faurecia Automotive Industrie, 92000 Nanterre (FR)
(72) Inventeur: Houyoux, Jean-Marie, 08210 Mouzon (FR)
(74) Mandataire: Hadjadj, Laurent

(56) Documents cités:
- EP-A- 0 333 267
- EP-A- 0 348 383
- DE-A- 10 044 740
- DE-A- 19 748 894
- US-B1- 6 182 411
- US-B1- 6 482 508

## Description

L'invention concerne un élément de faux-plancher pour véhicule automobile.

Dans les véhicules actuels, on distingue essentiellement deux types de faux-planchers par la nature de la liaison avec la caisse du véhicule : il s'agit des faux-planchers « à poser », et des faux-planchers « à suspendre ».

Les faux-planchers à poser, lorsqu'ils sont montés dans le véhicule, reposent à plat sur le plancher de la caisse, sur l'essentiel de la surface du faux-plancher.

A l'inverse, les faux-planchers à suspendre sont fixés à la caisse du véhicule principalement par des parties périphériques, la paroi inférieure du faux-plancher s'étendant, pour l'essentiel, au-dessus du plancher de la caisse.

Ces deux types de faux-planchers sont de conception très différente, en ce que les seconds doivent être prévus avec un réseau de nervures assurant un caractère « auto-porteur », de façon que le faux-plancher surélevé résiste à des contraintes de flexion importantes.

L'invention vise plus particulièrement un élément de faux-plancher conforme au préambule de la revendication 1.

Un tel élément de faux-plancher est décrit par US 6 482 508.

DE 100 44 740 décrit un élément de faux-plancher avec une rainure creusée dans sa face supérieure pour loger un faisceau de câbles.

Généralement, dans les véhicules comportant un faux-plancher suspendu, les conduits de câblage ou d'aération sont montés sur le plancher de caisse, ce qui présente un certain nombre d'inconvénients.

Un premier inconvénient important consiste dans la perte d'espace disponible entre le faux-plancher et le plancher de caisse, ce qui réduit les possibilités de rangement dans cet espace.

Un autre inconvénient important consiste dans les nuisances acoustiques dues à la transmission des vibrations de la caisse du véhicule à ces câblages ou conduits.

L'invention a pour objet de proposer des éléments de faux-plancher du type précité permettant de minimiser d'une part la perte d'espace disponible entre le plancher de caisse et le faux-plancher, et d'autre part les nuisances sonores dans l'habitacle dues à la transmission des vibrations de la caisse par les câbles électriques et les conduits, notamment d'aération.

A cet effet, l'invention porte sur un élément de faux-plancher conforme à la revendication 1.

Une telle disposition permet également à l'équipementier de livrer aux constructeurs automobiles des faux-planchers sous la forme de modules pré-assemblés à haut degré d'intégration de fonctions, notamment des fonctions de câblage et de conduite d'aération.

L'équipementier en charge de la fabrication du faux-plancher est ainsi à-même de fournir un module d'équipement dont la conception permet de diminuer le nombre d'opérations de montage effectuées par le constructeur, et par conséquent de diminuer la durée du cycle d'assemblage d'un véhicule. En outre, le module d'équipement peut être éventuellement testé, avec les fonctions intégrées, en une même opération de test réalisée par l'équipementier, préalablement au montage sur véhicule.

Suivant d'autres caractéristiques de l'élément de faux-plancher selon l'invention, prises seules ou selon toutes les combinaisons techniquement envisageables :
- la disposition dudit organe formant conduit ou support de fixation est prévue pour conférer audit élément de faux-plancher des caractéristiques de résistance mécanique prédéterminées ;
- l'élément de faux-plancher comprend au moins deux organes de rigidification formant conduit ou support de conduit ;
- l'élément de faux-plancher comprend des régions de fixation à des parties de caisse du véhicule solidaires du plancher, lesdites régions étant situées principalement sur la périphérie dudit élément ;
- l'élément de faux-plancher comprend une ouverture traversante, et ledit conduit débouche au voisinage de ladite ouverture, de sorte que l'ouverture définit un accès à une extrémité du conduit en vue de son raccordement, notamment à un système de ventilation; et
- l'élément de faux-plancher est muni d'un panneau mobile d'accès à une ouverture traversante, prévue pour déboucher sur un bac de rangement ménagé entre le plancher (7) de caisse du véhicule et l'élément de faux-plancher;
- chacune des parois inférieure et supérieure est réalisée en matière plastique par thermoconformation, les deux parois sont assemblées pour former ledit élément de faux-plancher soit selon un procédé en une étape soit selon un procédé en reprise.

L'invention vise également un faux-plancher pour véhicule automobile, du type à suspendre, comprenant au moins un élément de faux-plancher tel que décrit précédemment.

De préférence, le faux-plancher est constitué de plusieurs éléments de faux-plancher. Cela est souvent nécessaire pour pouvoir monté le faux-plancher dans la caisse du véhicule, notamment si le toit du véhicule est déjà monté lors de 1 étape de montage du faux-plancher. Dans ce cas, le faux-plancher complet peut être testé chez l'équipementier, puis démonté pour le transport et en vue du montage dans le véhicule.

L'invention vise enfin un véhicule automobile équipé d'un faux-plancher tel que décrit précédemment.

Un mode particulier de réalisation de l'invention va maintenant être décrit en référence aux dessins annexés, sur lesquels:
- la Figure 1 est une vue en perspective de la face inférieure d'un faux-plancher conforme à un premier mode de réalisation de l'invention;
- la Figure 2 est une vue en coupe, dans un plan vertical suivant la direction 2-2, d'un élément de faux-plancher représenté sur la Figure 1, et d'une partie de caisse de véhicule sur laquelle il est monté ; et
- la Figure 3 est une vue analogue à la Figure 2 d'un élément de faux-plancher non conforme à l'invention.

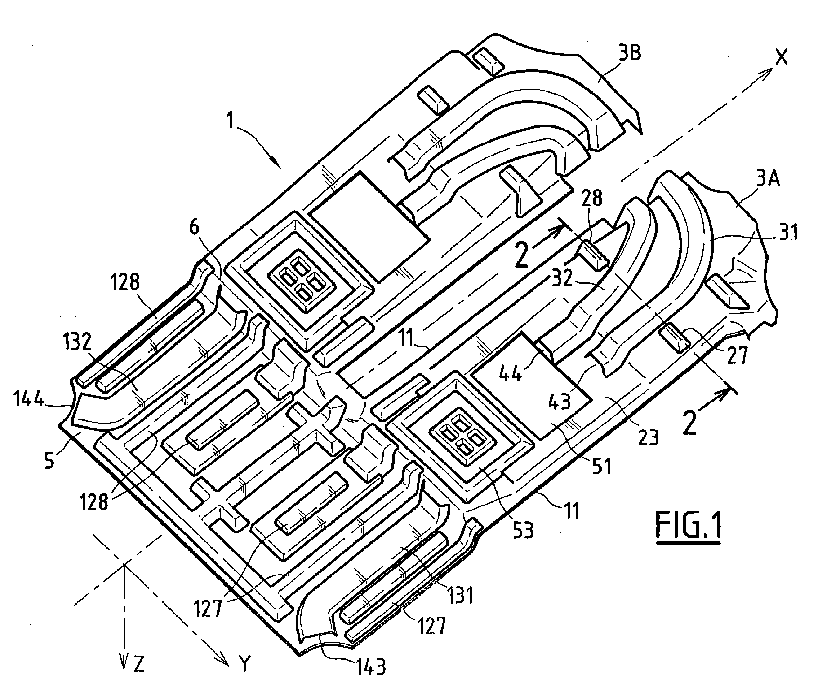

Sur la Figure 1, on a représenté un faux-plancher 1 de type « à suspendre » ou « suspendu », conforme à un premier mode de réalisation de la présente invention. Cette figure est orientée dans le repère orthonormé X, Y, Z correspondant à l'orientation normale d'un véhicule.

Dans ce système d'axe :
- l'axe X correspond à l'axe longitudinal du véhicule, orienté dans le sens de marche ;
- l'axe Z est l'axe vertical orienté du bas vers le haut ; et
- l'axe Y est l'axe transversal du véhicule.

Dans toute la description qui va suivre, les termes de position et d'orientation s'entendront en référence à ce système d'axe.

Sur la Figure 1, seule est visible la face inférieure du faux-plancher 1.

Sur cette Figure, on peut noter que le faux-plancher 1 est constitué essentiellement des éléments 3A, 3B, 5. Ces trois éléments peuvent être fabriqués ensemble d'une seule pièce, ou séparément, et assemblés avant montage sur véhicule, ou montés séparément sur le véhicule.

Chacun des éléments 3A, 3B, 5 est de forme générale rectangulaire.

Les éléments avant 3A, 3B sont solidarisés avec l'élément arrière 5 par leur bord arrière, de part et d'autre du plan médian X Z, par aboutement sur le bord avant 6 de l'élément 5.

Les deux éléments avant 3A, 3B, respectivement gauche et droite, sont sensiblement symétriques l'un de l'autre par rapport au plan médian vertical du véhicule X, Z. Ils sont allongés selon la direction longitudinale X, et s'étendent de façon généralement coplanaire.

L'élément arrière 5 est allongé suivant la direction transversale Y. Il est assemblé avec les deux éléments avant 3A, 3B par son côté avant de grande dimension.

L'élément arrière 5 est également sensiblement symétrique par rapport à l'axe médian vertical X, Z, de sorte que le faux-plancher 1 assemblé est aussi sensiblement symétrique par rapport à ce plan.

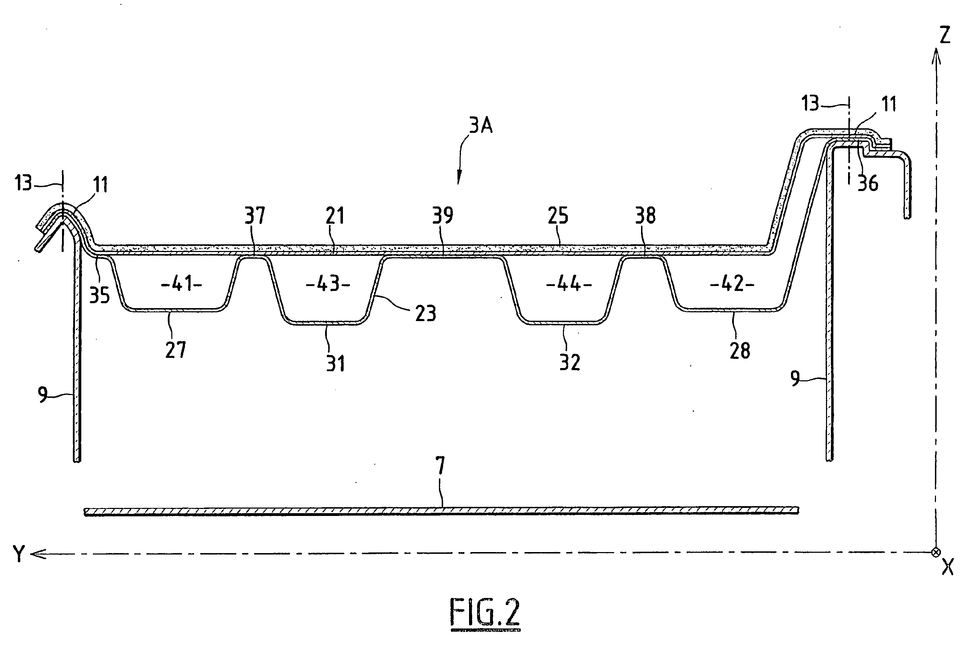

En référence aux figures 1 et 2, on va à présent décrire plus en détail l'élément avant gauche 3A des trois éléments de faux-plancher, étant entendu que cette description vaut pour l'élément symétrique 3B et, pour l'essentiel, pour l'élément de faux-plancher arrière 5.

Alors qu'il est représenté, sur la Figure 1, indépendamment de la caisse du véhicule, l'élément avant gauche 3A est représenté, sur la Figure 2, en configuration assemblée sur la caisse.

La caisse du véhicule a été représentée schématiquement par une partie de plancher de caisse 7, et des rebords 9 essentiellement verticaux, constitués de parties de caisse venues de matière avec le plancher, ou de longerons solidaires de la caisse.

L'élément de faux-plancher 3A, comme cela apparaît sur la Figure 2, repose sur les rebords 9 solidaires du plancher 7, par l'intermédiaire de régions périphériques 11. Ces régions périphériques 11 constituent des régions de fixation au plancher de caisse, lesdites fixations étant réalisées par tous moyens adaptés, symbolisés ici par les lignes mixtes 13.

L'élément de plancher 3A est formé essentiellement d'une paroi supérieure 21 et d'une paroi inférieure 23 superposées. Ces parois supérieure 21 et inférieure 23 sont assimilées respectivement aux faces supérieure et inférieure de l'élément de faux-plancher 3A.

Chacune des parois supérieure 21 et inférieure 23 sont par exemple réalisée en matériau plastique par thermoconformation, les deux parois étant assemblées entre elles soit au cours de l'étape de thermoconformation et dans le même outillage (procédé en une étape) ; soit au cours d'une étape supplémentaire après l'étape de thermoconformation (procédé d'assemblage en reprise). De préférence, la paroi supérieure 21 comprend d'une couche de matériau d'habillage 25 thermoconformable ou rapportée après l'étape de thermoconformation.

La paroi supérieure 21 constitue le sol de l'habitacle du véhicule.

La paroi inférieure 23 s'étend, comme on le voit sur la Figure 2, lorsque l'élément de faux-plancher 3 est monté dans le véhicule, au-dessus du plancher 7 de la caisse.

La paroi inférieure est formée avec une pluralité de nervures de rigidification 27, 28, 31, 32, constituées par des ondulations, en section transversale, de la paroi inférieure 23 entre des zones de contact 35, 36, 37, 38, 39 avec la paroi supérieure 21.

Ainsi, les nervures 27, 28, 31, 32 définissent, entre la paroi supérieure 21 et la paroi inférieure 23, des creux 41, 42, 43, 44 dans l'élément de faux-plancher.

Dans l'exemple représenté, deux de ces creux 43, 44 qui sont délimités par les nervures 31, 32, sont des conduits à section transversale fermée. Ils s'étendent essentiellement longitudinalement, et sont destinées au passage d'un fluide, par exemple de l'air de ventilation, ou de câbles électriques.

Les régions de contact consécutives 37, 39 des parois supérieure et inférieure 21, 23, entre lesquelles s'étend un conduit 43 de passage de fluide, sont naturellement prévues pour être étanches à ce même fluide.

Les nervures 31, 32 définissant les canaux ou conduits sont dimensionnées et localisées sur l'élément de faux-plancher, de façon à conférer à ce dernier, avec les autres nervures 27, 28, des caractéristiques de rigidité et de résistance mécanique prédéterminées.

En référence à nouveau à la Figure 1, il faut noter que l'élément de faux-plancher 3A est formé avec une ouverture traversante 51, au voisinage de laquelle débouchent les conduits 43, 44 par l'une de leurs extrémités. L'ouverture 51 définit ainsi une trappe dite « technique » permettant d'accéder à une extrémité des conduits 43, 44, de façon qu'un opérateur puisse, après montage de l'élément de faux-plancher 3A, raccorder ces conduits 43, 44, par exemple à un système de ventilation.

L'élément de faux-plancher 3A comporte en outre un panneau 53 qui peut être amovible ou articulé par rapport au reste du faux-plancher, ce panneau 53 donnant accès à un bac de rangement, qui peut être prévu entre le plancher 7 et l'élément de faux-plancher 3A. En effet, il est avantageux, dans le cas d'un faux-plancher suspendu, d'aménager cet espace en espace de rangement, eu égard au grand volume qu'un tel espace peut représenter.

Dans l'exemple représenté, comme mentionné précédemment, les deux éléments de faux-plancher 3A et 3B sont symétriques par rapport au plan vertical médian. Ainsi, il est inutile de décrire l'élément de faux-plancher 3B.

L'élément de faux-plancher 5 est analogue à l'élément qui vient d'être décrit 3A, en ce qu'il est formé de la même façon d'une paroi supérieure, d'une paroi inférieure, et d'une couche de matériau d'habillage disposée sur la paroi supérieure. La paroi inférieure est également formée avec un réseau de nervures 127, 128, 131, 132, constituées par des ondulations de la paroi inférieure. Certaines de ces nervures 143, 144 définissent aussi des conduits pour le passage, notamment, de câbles électriques ou d'air de ventilation.

C'est pourquoi cet élément 5 de faux-plancher ne sera pas décrit plus en détail.

Signalons simplement que cet élément de faux-plancher 5 ne comporte pas, dans l'exemple représenté, et contrairement aux deux autres éléments 3A, 3B, de trappe technique ni de panneau d'accès à l'espace de rangement.

Les trois éléments de faux-plancher 3A, 3B et 5 peuvent être soit fabriqués ensemble d'une seule pièce, soit fabriqués séparément et assemblés pour former le faux-plancher 1, préalablement au montage de ce dernier sur le véhicule, ou fixés individuellement à l'intérieur de la caisse du véhicule, et éventuellement fixés les uns aux autres par leur bord commun 6.

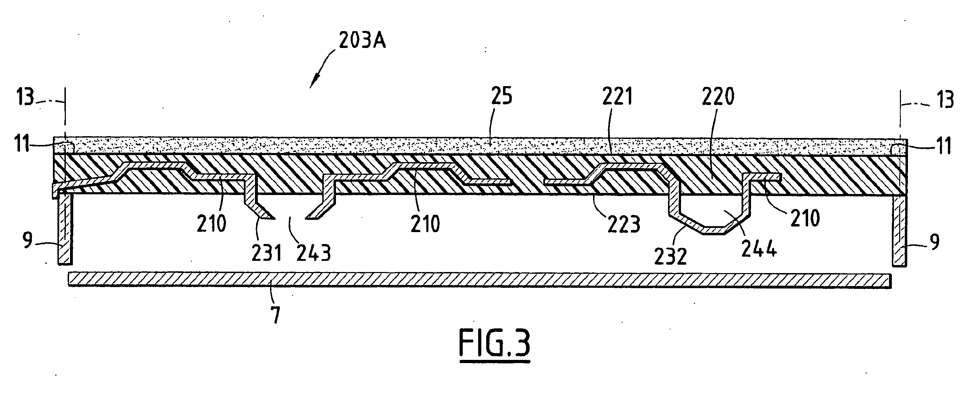

En référence à la Figure 3, on va à présent décrire succinctement une variante de réalisation non-conforme à l'invention.

L'élément de faux-plancher 203A représenté sur cette Figure est analogue à l'élément 3A décrit précédemment, en ce qu'il est un élément de faux-plancher suspendu, fixé à la caisse 9 par sa périphérie 11, et en ce qu'il est pourvu également d'organes de rigidification 210. Il s'en distingue principalement en ce que sa structure présente une paroi unique 220, qui définit une matrice en matière plastique, et en ce que les organes de rigidification 210 sont formés par des inserts métalliques. Les inserts 210 sont partiellement noyés dans la matrice, cette dernière étant par exemple surmoulée sur les inserts.

Dans cet exemple de réalisation comme dans le précédent, les faces supérieure 221 et inférieure 222 sont assimilées aux faces supérieure et inférieure de la structure porteuse 220, bien que la face supérieure 221 soit revêtue d'une couche de matériau d'habillage 25.

Les inserts 210 ont des parties 231, 232 en saillie de la face inférieure 221, qui définissent soit des supports de fixation 243 pour un conduit de câblage ou d'aération, soit directement des conduits 244 de câblage ou d'aération (plus généralement de fluide). Les moyens de fixation associés aux supports 243 n'ont pas été représentés mais peuvent être de divers types adaptés.

Dans ce mode de réalisation, les inserts 210 ont une fonction de rigidification de l'élément de faux-plancher 203A par les parties d'insert noyées dans la matrice, et une fonction d'intégration de conduits et câbles par les parties d'insert en saillie 231, 232.

## Revendications

1. Elément de faux-plancher pour véhicule automobile, du type à suspendre, comprenant une face supérieure (21) prévue pour constituer une partie du sol de l'habitacle du véhicule, et une face inférieure (23) prévue pour s'étendre essentiellement au-dessus du plancher (7) de la caisse du véhicule, ledit élément de faux-plancher (3A ; 3B ; 5) étant formé avec des organes de rigidification (27, 28, 31, 32 ; 127, 128, 131, 132), l'un au moins (31, 32 ; 131, 132) desdits organes de rigidification formant un conduit (43, 44 ; 143 , 144), l'élément de faux plancher comprenant une paroi supérieure (21) et une paroi inférieure (23) solidaires définissant respectivement les faces supérieure et inférieure, **caractérisé en ce que** lesdits organes de rigidification (27, 28, 31, 32 ; 127, 128, 131, 132) sont définis par des nervures formées d'une pièce avec la paroi inférieure (23)et forment des saillies de la face inférieure (23), les nervures (31, 32, 131, 132) définissant entre la paroi supérieur (21) et la paroi inférieure (23) au moins un conduit (43, 44, 143, 144) à section transversale fermée adapté pour le passage d'un fluide, notamment d'air de ventilation.

2. Elément de faux-plancher selon la revendication 1, **caractérisé en ce que** la disposition dudit organe (31, 32 ; 131, 132 ; 210) formant conduit (43, 44 ; 143, 144 ; 244) ou support de fixation (243) est prévue pour conférer audit élément de faux-plancher (3A ; 3B ; 5) des caractéristiques de résistance mécanique prédéterminées.

3. Elément de faux-plancher selon la revendication 1 ou 2, **caractérisé en ce qu'**il comprend au moins deux organes de rigidification (31, 32 ; 131, 132) formant conduit ou support de conduit.

4. Elément de faux-plancher selon l'une quelconque des revendications 1 à 3, **caractérisé en ce qu'**il comprend des régions (11) de fixation à des parties de caisse (9) du véhicule solidaires du plancher (7), lesdites régions (11) étant situées principalement sur la périphérie dudit élément (3A ; 3B ; 5).

5. Elément de faux-plancher selon l'une quelconque des revendications 1 à 4, **caractérisé en ce qu'**il comprend une ouverture traversante (51), et ledit conduit (43, 44) débouche au voisinage de ladite ouverture (51), de sorte que l'ouverture (51) définit un accès à une extrémité du conduit (43, 44) en vue de son raccordement,notamment à un système de ventilation.

6. Elément de faux-plancher selon l'une quelconque des revendications 1 à 5, **caractérisé en ce qu'**il est muni d'un panneau mobile (53) d'accès à une ouverture traversante, prévue pour déboucher sur un bac de rangement ménagé entre le plancher (7) de caisse du véhicule et l'élément de faux-plancher (3A ; 3B).

7. Elément de faux-plancher selon la revendication 1, **caractérisé en ce que** chacune des parois inférieure (23) et supérieure (21) est réalisée en matière plastique par thermoformage, les deux parois (21, 23) étant assemblées pour former ledit élément de faux-plancher (3A ; 3B ; 5).

8. Faux-plancher pour véhicule automobile, du type à suspendre, **caractérisé en ce qu'**il comprend au moins un élément de faux-plancher (3A, 3B, 5) conforme à l'une quelconque des revendications 1 à 7.

9. Véhicule automobile équipé d'un faux-plancher suspendu (1) selon la revendication 8.

## Claims

1. False-floor element for a motor vehicle, of the type which is to be suspended and comprising an upper face (21) which is intended to constitute part of the floor of the vehicle's passenger comportment, and a lower face (23) which is intended to extend essentially above the floor (7) of the vehicle body, the said false-floor element (3A; 3B; 5) being formed with stiffening members (27, 28, 31, 32; 127, 128, 131, 132), at least one (31, 32; 131, 32) of the said stiffening members forming a conduit (43, 44; 143, 144), said false-floor element comprising an upper wall (21) and a lower wall (23) which are integral and which define the upper and lower faces respectively, **characterised in that** the said stiffening members (27, 28, 31, 32; 127, 128, 131, 132) are defined by ribs which are formed in one piece with the lower wall (23) and form projections from the lower face (23), said ribs (31, 32, 131, 132) defining, between the upper wall (21) and the lower wall (23), at least one conduit (43, 44, 143, 144) which has a closed cross-section and is suitable for the passage of a fluid, especially ventilation air.

2. False-floor element according to claim 1, **characterised in that** the disposition of the said member (31, 32; 131, 132; 210) forming a conduit (43, 44; 143, 144; 244) or fixing support (243) is intended to confer predetermined mechanical-strength characteristics on the said false-floor element (3A; 3B; 5).

3. False-floor element according to claim 1 or 2, **characterised in that** it comprises at least two stiffening members (31, 32; 131, 132) forming a conduit or conduit support.

4. False-floor element according to any of claims 1 to 3, **characterised in that** it comprises regions (11) for fixing to parts (9) of the vehicle body which are integral with the floor (7), the said regions (11) being situated mainly on the periphery of the said element (3A; 3B; 5).

5. False-floor element according to any of claims 1 to 4, **characterised in that** it comprises a through-aperture (51), and the said conduit (43, 44) opens out in the vicinity of the said aperture (51), on such a way that said aperture (51) defines an entrance to one end of the conduit (43, 44) with a view to connecting it, especially to a ventilation system.

6. False-floor element according to any of claims 1 to 5, **characterised in that** it is fitted with a movable panel (53) providing access to a through-aperture which is intended to open onto a storage bin arranged between the floor (7) of the vehicle body and the false-Floor element (3A; 3B).

7. False-floor element according to claim 1, **characterised in that** each of the lower (23) and upper (21) walls is produced from plastic material by thermoforming, the two walls (21, 23) being assembled to form the said false-floor element (3A; 3B; 5).

8. False floor for a motor vehicle, of the type which is to be suspended, **characterised in that** it comprises at least one false-floor element (3A; 3B; 5) in accordance with any of claims 1 to 7.

9. Motor vehicle equipped with a suspended false floor (1) according to claim 8.

## Patentansprüche

1. Doppelbodenelement des aufzuhängenden Typs für ein Kraftfahrzeug, aufweisend eine obere Seite (21), die vorgesehen ist, um einen Teil des Fußbodens des Fahrgastraumes des Fahrzeugs auszubilden, und eine untere Seite (23), die vorgesehen ist, um sich im Wesentlichen über dem Boden (7) der fahrzeugkarosserie zu erstrecken, wobei das Doppelbodenelement (3A; 3B; 5) mit Versteifungsmitteln (27, 28, 31, 32; 127, 128, 131, 132) ausgebildet ist, wobei mindestens eines (31, 32; 131, 132) der Versteifungsmittel einen Kanal (43, 44; 143, 144) ausbildet, wobei das Doppelbodenelement eine obere Wand (21) und eine untere Wand (23) aufweist, die einstückig sind, die die obere beziehungsweise die untere Fläche definieren, **dadurch gekennzeichnet, dass** die Versteifungsmittel (27, 28, 31, 32; 127, 128, 131, 132) durch mit der unteren Wand (23) aus einem Stück gebildete Verstärkungsrippen definiert sind und Vorsprünge von der unteren Fläche (23) aus ausbilden, wobei die Verstärkungsrippen (31, 32, 131, 132) zwischen der oberen Wand (21) und der unteren Wand (23) mindestens einen Kanal (43, 44, 143, 144) mit geschlossenem Querschnitt definieren, der für das Hindurchströmen eines Fluids, insbesondere von Belüftungsluft angepasst ist.

2. Doppelbodenelement gemäß Anspruch 1, **dadurch gekennzeichnet, dass** die Anordnung des Mittels (31, 32; 131, 132; 210), das einen Kanal (43, 44; 143, 144; 244) oder eine Befestigungsstütze (243) ausbildet, vorgesehen ist, um dem Doppelbodenelement (3A; 3B; 5) vorbestimmte mechanische Festigkeitseigenschaften zu verleihen.

3. Doppelbodenelement gemäß Anspruch 1 oder 2, **dadurch gekennzeichnet, dass** es mindestens zwei Versteifungsmittel (31, 32; 131, 132) aufweist, die einen Kanal oder eine Kanalstütze ausbilden.

4. Doppelbodenelement gemäß einem der Ansprüche 1 bis 3, **dadurch gekennzeichnet, dass** es Bereiche (11) zum Befestigen an Karosserieteilen (9) des Fahrzeugs aufweist, die mit dem Boden (7) einstückig sind, wobei die Bereiche (11) hauptsächlich am Umfang des Elements (3A; 3B; 5) angeordnet sind.

5. Doppelbodenelement gemäß einem der Ansprüche 1 bis 4, **dadurch gekennzeichnet, dass** es eine Durchgangsöffnung (51) aufweist und der Kanal (43, 44) benachbart zu der Öffnung (51) ausmündet, so dass die Öffnung (51) einen Zugang zu einem Ende des Kanals (43, 44) im Hinblick auf dessen Anschließen insbesondere an ein Lüftungssystem definiert.

6. Doppelbodenelement gemäß einem der Ansprüche 1 bis 5, **dadurch gekennzeichnet, dass** es mit einer bewegbaren Platte (53) für den Zugang zu einer Durchgangsöffnung versehen ist, die vorgesehen ist, um in ein Aufbewahrungsfach zu münden, das zwischen dem Boden (7) der Fahrzeugkarosserie und dem Doppelbodenelement (3A; 3B) angeordnet ist.

7. Doppelbodenelement gemäß Anspruch 1, **dadurch gekennzeichnet, dass** jede von der unteren (23) und der oberen (21) Wand mittels Thermoformens aus Kunststoff hergestellt ist, wobei die beiden Wände (21, 23) zusammengefügt sind, um das Doppelbodenelement (3A; 3B; 5) auszubilden.

8. Doppelboden des aufzuhängenden Typs für ein Kraftfahrzeug; **dadurch gekennzeichnet, dass** er mindestens ein Doppelbodenelement (3A, 3B, 5) gemäß einem der Ansprüche 1 bis 7 aufweist.

9. Kraftfahrzeug, das mit einem aufgehängten Doppelboden (1) gemäß Anspruch 8 ausgestattet ist.
